(19) Europäisches Patentamt
European Patent Office
Office européen des brevets

(11) EP 1 414 163 A1

## (12) EUROPEAN PATENT APPLICATION
published in accordance with Art. 158(3) EPC

(43) Date of publication:
28.04.2004 Bulletin 2004/18

(51) Int Cl.7: **H04B 1/26**, H04B 1/30, H04L 27/14

(21) Application number: 02730904.6

(22) Date of filing: 04.06.2002

(86) International application number:
PCT/JP2002/005491

(87) International publication number:
WO 2003/013013 (13.02.2003 Gazette 2003/07)

(84) Designated Contracting States:
AT BE CH CY DE DK ES FI FR GB GR IE IT LI LU MC NL PT SE TR
Designated Extension States:
AL LT LV MK RO SI

(30) Priority: 27.07.2001 JP 2001228063

(71) Applicant: MATSUSHITA ELECTRIC INDUSTRIAL CO., LTD.
Kadoma-shi, Osaka 571-8501 (JP)

(72) Inventors:
• IMAGAWA, Yasumi
Kanazawa-shi, Ishikawa 921-8031 (JP)
• YOKONAGA, Hiroyuki
Kanazawa-shi, Ishikawa 920-0055 (JP)
• HASHIGAYA, Atsuhiko
Yokohama-shi, Kanagawa 226-0014 (JP)
• KATAYAMA, Hiroshi
Kawasaki-shi, Kanagawa 212-0055 (JP)

(74) Representative: Grünecker, Kinkeldey, Stockmair & Schwanhäusser Anwaltssozietät
Maximilianstrasse 58
80538 München (DE)

## (54) RECEIVER AND COMMUNICATION TERMINAL

(57) A subject of the present invention is to provide a receiver and a communication terminal that are adapted appropriately for a plurality of communication systems.

A receiver and a communication terminal according to the present invention comprises an antenna portion 1, a high-frequency filter portion 2, a high-frequency amplifier portion 3, a first orthogonal mixer portion 4, a first local oscillator portion 5, a first channel selecting filter portion 6 for band-limiting I, Q signals, a variable-gain amplifier portion 7 for adjusting an amplitude, a second orthogonal mixer portion 8 for converting the I, Q signals into baseband signals when a system is TDMA, a second local oscillator portion 9, a changing switch portion 10 for switching a connection to the variable-gain amplifier portion 7 or the second orthogonal mixer portion 8, a second channel selecting filter portion 11, and a decoding portion 12 having AD converters 12a, 12b, an RSSI 12c for obtaining a signal amplitude, an AGC 12d for controlling gains of the high-frequency amplifier portion 3 and the variable-gain amplifier portion 7 based on the signal amplitude, a CDMA decoder portion 12e, a TDMA decoder portion 12f, and a receiver mode setting portion 12g for setting the first channel selecting filter portion 6 in response to the communication system.

FIG. 1

EP 1 414 163 A1

## Description

<Technical Field>

The present invention relates to a multi-mode receiver and a communication terminal, which are adapted appropriately for a plurality of communication systems.

<Background Art>

In recent years, the development of the Zero IF receiver (referred to as a "ZIF receiver" hereinafter) and the Low IF receiver in which the intermediate frequency of the superheterodyne receiver is set to a very low frequency (referred to as a "LIF receiver" hereinafter) is proceeding prosperously. In the ZIF receiver and the LIF receiver, easiness of the built-in, miniaturization of the terminal, and a lower cost can be implemented since the channel selecting filters that composed of the discrete elements such as the SAW filter, the ceramic filter, etc. are constructed on the IC chip.

Also, in recent years, the multi-mode receiver that is able to transmit/receive the signal between different communication systems such as PDC and PHS, IS95 and AMPS, etc. via the same terminal is requested. The multi-mode type receiver in the prior art will be explained hereunder. Normally, in the radio system of the TDMA system such as GSM and PDC, PHS, etc., the receiver is intermittently operated to reduce a consumption current. In contrast, in the radio system of the CDMA system such as W-CDMA, IS95, etc. or the analog system such as AMPS, etc., the receiver executes the continuous receiving operation during the communication.

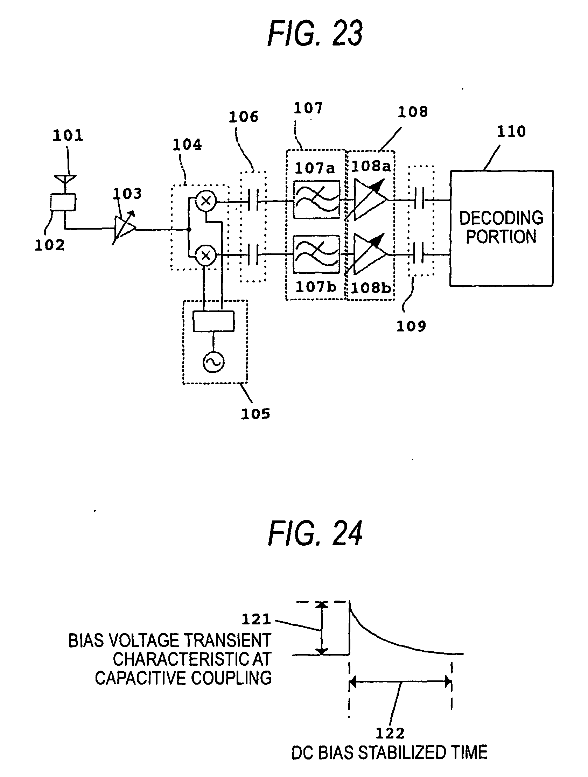

First, the ZIF receiver in the prior art will be explained with reference to FIG.23. The radio signal that is received via an antenna 101 is attenuated by a high-frequency filter 102 except a receiving frequency bandwidth, and then amplified by a high-frequency amplifier 103. Then, baseband I signal and Q signal that have an orthogonal relationship are generated by mixing an output signal of a local oscillator portion 105, which outputs a pair of orthogonal local oscillation signals that have the almost same frequency as the receiving frequency, with a signal that is amplified by the high-frequency amplifier 103 by means of an orthogonal mixer 104. Then, undesired waves are removed by limiting bandwidths of the I, Q signals by means of channel selecting filters 107a, 107b, and then the I, Q signals are amplified up to a desired level by variable-gain amplifiers 108a, 107b and then are decoded by a decoding portion 110.

In this ZIF receiver, the receiving sensitivity is deteriorated by the offset voltage of the baseband. As the result of the mismatching between circuit constituent elements and the self-mixture in the orthogonal mixer 104 between the output of the local oscillator portion 105 and the local oscillation signal being leaked into the high-frequency signal input of the orthogonal mixer 104, the offset voltage is generated. In the ZIF receiver shown in FIG.23, the offset voltage generated in the baseband is eliminated by providing HPFs (High Pass Filters) consisting of a first coupling capacitor 106, a second coupling capacitor 109, etc. between respective circuit blocks.

In the TDMA system, since an intermittent receiving operation for receiving only the concerned slot is carried out, the receiver must be caused to start at a high speed and to shift to the receiving operation quickly. However, if the capacitive couplings are employed to eliminate the offset voltage, as shown in FIG.24, a DC bias voltage variation 121 is generated in the cut-off frequency of HPF at the time of start. Therefore, a time constant of a bias voltage stable time 122 required until the receiver is stabilized prolongs a starting time extremely. Also, since low-frequency components of the I, Q signals are attenuated or a group delay time is varied by HPFs, it is possible that the receiving characteristic is deteriorated.

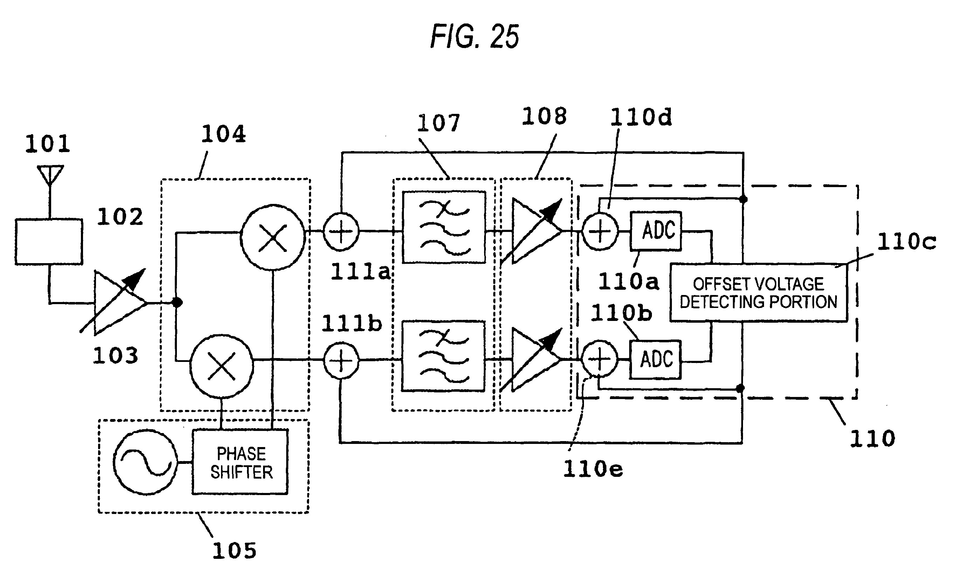

The means for eliminating the offset voltage is also set forth in JP-A-7-111471. An outline of the offset voltage elimination circuit set forth in this Publication is shown in FIG.25. In this case, since the basic configuration of the receiver is similar to that in FIG.23, their explanation will be omitted herein. In FIG.25, the offset voltages in I, Q components are detected by ADCs (AD converters) 110a, 110b and an offset voltage detecting portion 110c contained in the decoding portion 110, and then the offset voltage is eliminated by providing a negative feedback to adders 111a, 111b, 110d, 110e. With this configuration, the offset voltage elimination circuit is particularly needed, but it is very difficult to easily implement such circuit because the offset voltage must be adjusted to a small value that is enough for a weak receiving signal amplitude. Also, since times to detect/correct the offset voltage are needed other than the normal receiving operation, an operating time of the receiver is prolonged and thus a battery operating time is shortened.

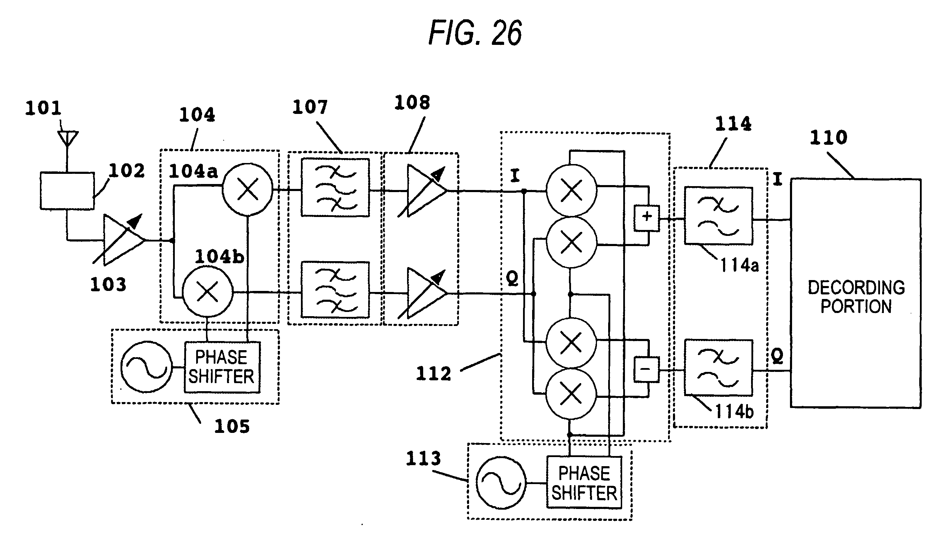

Next, the LIF receiver in the prior art will be explained with reference to FIG.26 hereunder. In FIG.26, the same reference symbols are affixed to portions that are duplicated with those in FIG.24 (the ZIF receiver in the prior art). The radio signal that is received via the antenna 101 is attenuated by the high-frequency filter 102 except the receiving frequency bandwidth, and then is amplified by the high-frequency amplifier 103. Then, the signal is converted into intermediate frequency (IF) signals in the I, Q components, which have an orthogonal relationship, by mixing the output signal of the local oscillator portion 105, which outputs a pair of orthogonal local oscillation signals whose frequencies are offset from the radio signal, with the signal that is amplified by the high-frequency amplifier 103 by virtue of the orthogonal mixer 104. Then, undesired waves are removed by limiting the bandwidth by means of the channel selecting filters 107a, 107b for the I, Q signals, and then the I, Q signals are amplified up to a desired level by the variable-gain amplifiers 108a, 108b.

In this LIF receiver, since the frequency of the signal is converted into the low intermediate frequency, the offset voltages generated in the channel selecting filters 107a, 107b and the variable-gain amplifiers 108a, 108b can be eliminated by HPFs that are composed of the capacitive coupling. In other words, the channel selecting filters 107a, 107b may be constructed by the BPF (Band Pass Filter). Then, the baseband I signal and Q signal that have an orthogonal relationship mutually are generated by mixing output signals of a second local oscillator portion 113, which outputs a pair of orthogonal local oscillation signals that have the almost same frequency as the intermediate frequency, with the IF signals by means of a second orthogonal mixer 112. The LIF receiver shown in FIG.26 is the Weber-type image canceling mixer, and image signals are canceled by the second orthogonal mixer 112, and undesired wave are removed by the second channel selecting filters 114a, 114b and then the signals are decoded by the decoding portion 110.

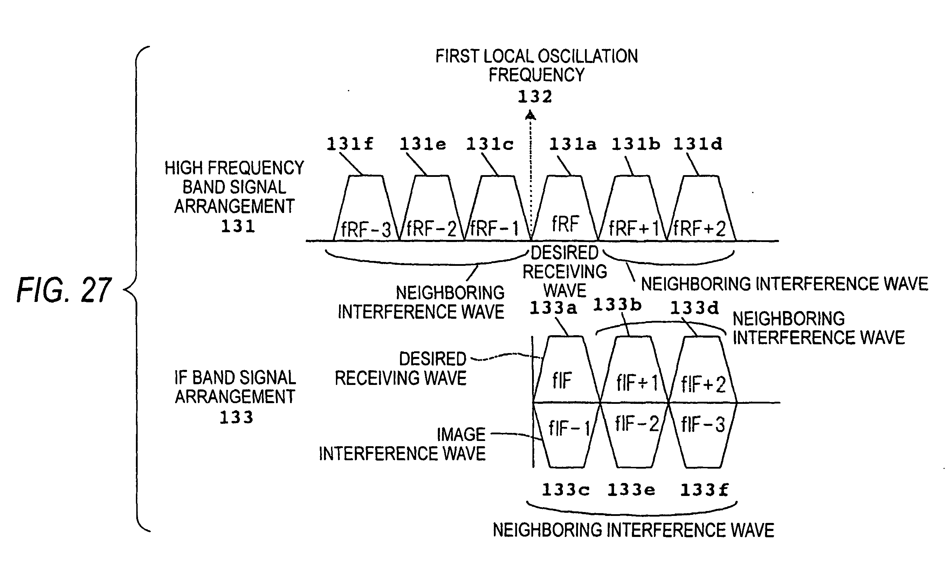

A set example of the intermediate frequency in the LIF receiver explained as above in the prior art is shown in FIG.27. A symbol 131 indicates an arrangement of signals in the high-frequency bandwidth, and a symbol 133 indicates an arrangement of signals in the intermediate-frequency bandwidth. In the situation that neighboring signal waves 131b, c, d, e, f serving as interference waves against a desired receiving wave 131a are present, if a first local oscillation frequency 132 is set in such a way that output frequencies of the first local oscillator portion 105 shown in FIG.26 have a 1/2-channel interval, a desired receiving wave 133a and neighboring signal waves 133b, c, d, e, f are arranged in the intermediate frequency bandwidth 133. In this case, the neighboring signal wave 133c gives the image signal.

In the receiving system using the intermediate frequency, it is well known that the image signal is always present. In the case of the cellular phone using the TDMA system, the frequency used in PDC, PHS, for example, is planed such that adjacent signal waves serving as the interference should be separated in excess of the next adjacent channel frequency. Also, since the adjacent channel frequency is used in GSM but the standard as the interference resistance is relaxed, it is desired that a frequency that is 1/2 of the channel interval should be used as the intermediate frequency, as shown in FIG.27. More particularly, there are employed IF=12.5 kHz in PDC, IF=150 kHz in PHS, and IF=100 kHz in GSM.

Accordingly, the signal in the adjacent channel bandwidth corresponding to the image frequency is suppressed by using the image canceling mixer. As described above, in the cellular phone employing the TDMA system, the adjacent channel frequency is not used or the standard against the interference is relaxed. Thus, since the image signal can be easily canceled to the extent of about 30 dB by the image canceling mixer, the sufficient interference resistance of the adjacent signal wave can be assured. In contrast, in the CDMA system, the adjacent channel frequency is used, and thus suppression of 60 dB or more is needed by the image canceling mixer only. An amount of image cancellation is decided by orthogonality of phases between I, Q and conformity of amplitudes. In order to get the image canceling characteristic of 60 dB or more, an error of the orthogonal phase between I, Q must be suppressed to 0.1 degree or less and also an error of the amplitude between I, Q must be suppressed to 0.1 dB or less. As a result, it is very difficult to implement such image canceling mixer.

As explained above, when the multi-mode receiver that is adapted for a plurality of communication systems is to be constructed, problems described in the following were present. First, when the ZIF receiver is used in the TDMA system such as GSM and PDC, PHS, etc., respective blocks are capacitive-coupled in this receiver to eliminate the offset voltage. Therefore, such a problem existed that it is difficult to start the terminal at a high speed. Also, such a problem existed that it is difficult to implement an adjusting function by the simple circuit configuration. In contrast, when the LIF receiver is used in the CDMA system such as IS-95, W-CDMA, etc., such a problem existed that it is difficult to implement simply the image canceling mixer that is used to assure the adjacent channel interference characteristic. In this manner, when the receiver that can be adapted for both the TDMA system and the CDMA system is composed of any one of the ZIF receiver or the LIF receiver, such a problem existed that the desired characteristics cannot be obtained.

The present invention has been made in view of the above problems, and it is an object of the present invention to provide a receiver and a communication terminal, which are adapted appropriately for a plurality of communication systems.

<Disclosure of Invention>

In order to overcome the above problems, a receiver according to the present invention, which is adapted for both communication systems of a TDMA system and a CDMA system, comprises a first orthogonal mixer portion for orthogonal-transforming a received signal by a signal having a predetermined frequency; a decoding portion for decoding the signal that is subjected to orthogonal transformation; a changing switch portion for switching a signal path from the first orthogonal mixer portion to the decoding portion when a communication system is the TDMA system or the CDMA system; and a second orthogonal mixer portion for orthogonal-transforming a signal that is subjected to orthogonal transformation in the first orthogonal mixer portion; wherein, when the communication system is the TDMA system, the first orthogonal mixer portion orthogonal-transforms the received signal by a signal whose frequency is offset from the received signal, and the changing switch portion selects the signal path through which the signal that is subjected to orthogonal transformation in the first orthogonal mixer portion is input into the decoding portion via the second orthogonal mixer portion, and, when the communication system is the CDMA system, the first orthogonal mixer portion orthogonal-transforms the received signal by a signal whose frequency is identical to the received signal, and the changing switch portion selects the signal path through which the signal that is subjected to orthogonal transformation in the first orthogonal mixer portion is input into the decoding portion without intervention of the second orthogonal mixer portion.

Also, in the receiver according to the present invention, the decoding portion has a TDMA decoder portion for decoding a signal in the TDMA system and a CDMA decoder portion for decoding a signal in the CDMA system, and the signal is decoded by using the TDMA decoder portion when the communication system is the TDMA system, and the signal is decoded by using the CDMA decoder portion when the communication system is the CDMA system.

Also, the receiver according to the present invention further comprises a first filter portion for band-limiting the signal that is subjected to the orthogonal transformation in the first orthogonal mixer portion; a second filter portion for band-limiting the signal that is subjected to band limitation in the first filter portion and also is subjected to the orthogonal transformation in the first orthogonal mixer portion or the second orthogonal mixer portion; a filter setting changing portion for changing settings of the first filter portion and the second filter portion in response to the communication system; a high-frequency amplifier portion for amplifying the received signal; a variable-gain amplifier portion for adjusting the signal, which is subjected to the band limitation in the first filter portion, to a predetermined amplitude level; and a gain varying portion for varying a gain of the variable-gain amplifier portion or gains of the high-frequency amplifier portion and the variable-gain amplifier portion in response to the amplitude of the signal that is input into the decoding portion.

Also, in the receiver according to the present invention, the settings of the first filter portion and the second filter portion are a frequency characteristic and a Q value of each filter portion.

Also, a terminal according to the present invention has the receiver set forth in claim 1, claim 2, claim 3 or claim 3 in CLAIMS.

As a result, the multi-mode receiver and the communication terminal, which are adapted appropriately for a plurality of communication systems (the TDMA system and the CDMA system), can be provided without necessity to provide the particular offset voltage elimination circuit. Also, the receiver and the communication terminal that is adapted for any one communication system can be provided by the same configuration.

<Brief Description of Drawings>

FIG.1 is a configurative view showing a receiver according to a first embodiment of the present invention;
FIG.2 is a configurative view showing a configuration of the receiver according to the first embodiment in an LIF receiver mode;
FIG.3 is a configurative view showing a configuration of the receiver according to the first embodiment in a ZIF receiver mode;
FIG.4 is an explanatory view explaining an outline of a frame structure of GSM (TDMA system);
FIG.5 is an explanatory view explaining an outline of a frame structure of W-CDMA (CDMA system);
FIG.6 is configurative view showing a second local oscillator portion;
FIG.7 is configurative view of a secondary biquad LPF;
FIG.8 is configurative view of a gm amplifier;
FIG.9 is configurative view of a DA converter;
FIG.10 is a flowchart explaining adjustment of variation in a frequency characteristic;
FIG.11 is configurative view of a primary HPT;
FIG.12 is configurative view of a high frequency amplifier portion;
FIG.13 is configurative view of a high frequency amplifier portion whose gain can be varied;
FIG.14 is configurative view of a first local oscillator portion;
FIG.15 is configurative view of a first orthogonal mixer portion;
FIG.16 is configurative view of a high frequency switch;
FIG.17 is configurative view of a variable-gain amplifier portion;
FIG.18 is configurative view of variable-gain amplifier portions that are cascade-connected at plural stages;
FIG.19 is a flowchart explaining adjustment of gain variation;
FIG.20 is a configurative view showing a pertinent portion of a receiver according to a second embodiment of the present invention;
FIG.21 is configurative view of an offset voltage elimination circuit;
FIG.22 is a flowchart explaining adjustment of the offset voltage;
FIG.23 is configurative view of the ZIF receiver in the prior art;
FIG.24 is a view explaining variation in the bias voltage in starting the ZIF receiver in the prior art;
FIG.25 is a configurative view showing an example of the offset voltage elimination circuit;

FIG.26 is configurative view of the LIF receiver in the prior art; and

FIG.27 is an explanatory view explaining a set example of an intermediate frequency in the LIF receiver in the prior art.

In this case, in Figures, a reference symbol 1 is an antenna portion, 1a, 1b, 1c are an antenna, 2 is a high-frequency filter portion, 3 is a high-frequency amplifier portion, 4 is a first orthogonal mixer portion, 4a is a first I-signal mixer, 4b is a first Q-signal mixer, 5 is a first local oscillator portion, 5a is a first oscillator, 5b is a first 90-degree phase shifter, 6 is a first channel selecting filter portion, 6a is a first I-signal channel selecting filter, 6b is a first Q-signal channel selecting filter, 7 is a variable-gain amplifier portion, 7a is an I-signal variable-gain amplifier, 7b is a Q-signal variable-gain amplifier, 8 is a second orthogonal mixer portion, 8a to 8d are mixers, 8e is an adder, 8f is a subtractor, 9 is a second local oscillator portion, 9a is a second oscillator, 9b is a second 90-degree phase shifter, 10 is a changing switch portion, 10a is an I-signal changing switch, 10b is a Q-signal changing switch, 11 is a second channel selecting filter portion, 11a is a second I-signal channel selecting filter, 11b is a second Q-signal channel selecting filter, 11h, 11i are adders, 12 is a decoding portion, 12a is an I-signal AD converter, 12b is a Q-signal AD converter, 12c is RSSI, 12d is AGC, 12e is a CDMA decoder portion, 12f is a TDMA decoder portion, 12g is a receiver mode setting portion, 12h is an offset voltage adjusting portion, 12k is a storing circuit, and 12l, 12m are DA converters.

<Best Mode for Carrying Out the Invention>

Embodiments of a receiver of the present invention will be explained with reference to the drawings in order of [First Embodiment], [Second Embodiment], [Thi rd Embodiment], and [Fourth Embodiment] hereinafter.

[First Embodiment]

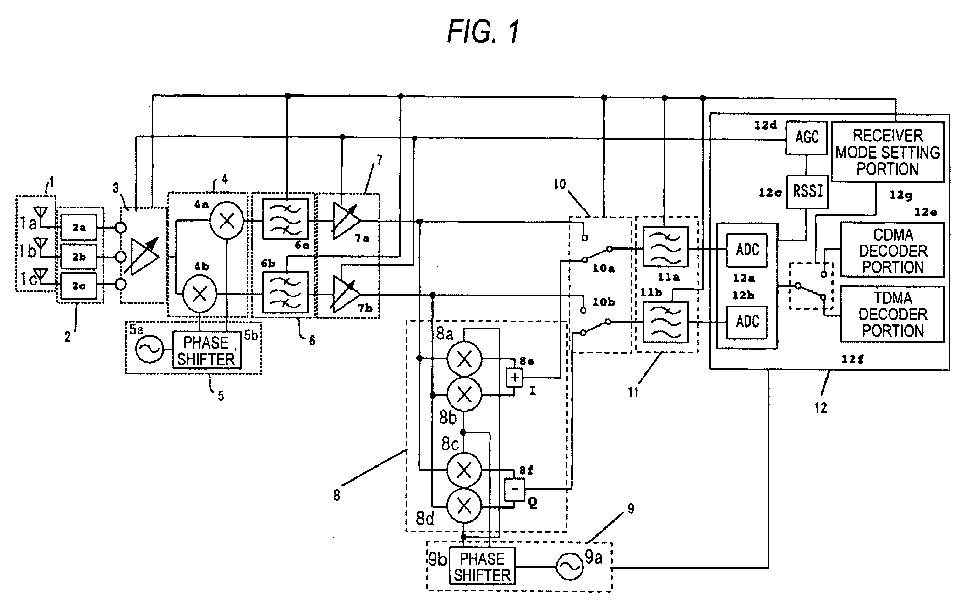

FIG.1 is a configurative view showing a receiver according to a first embodiment of the present invention. In FIG.1, the receiver of the present embodiment is constructed to include an antenna portion 1, a high-frequency filter portion 2, a high-frequency amplifier portion 3, a first orthogonal mixer portion 4, a first local oscillator portion 5, a first channel selecting filter portion 6 corresponding to a first filter portion set forth in Claims, a variable-gain amplifier portion 7, a second orthogonal mixer portion 8, a second local oscillator portion 9, a changing switch portion 10, a second channel selecting filter portion 11 corresponding to a second filter portion set forth in Claims, and a decoding portion 12.

Respective constituent elements that the receiver of the present embodiment has will be explained hereunder. In this case, each constituent element is constructed by one or plural integrated circuits. First, the antenna portion 1 receives radio signals with different frequencies respectively, and is constructed to include antennas 1a, 1b, 1c. Also, the high-frequency filter portion 2 attenuates the radio signal being received via the antenna portion 1 except a desired bandwidth, and is constructed to include high-frequency filters 2a, 2b, 2c that are connected to respective antenna outputs. Also, the high-frequency amplifier portion 3 amplifies an output of the high-frequency filter portion 2, and has a gain varying function.

Also, the first orthogonal mixer portion 4 converts an output of the high-frequency amplifier portion 3 into orthogonal I, Q signals, and is constructed to include a first I-signal mixer 4a and a first Q-signal mixer 4b. Also, the first local oscillator portion 5 outputs a pair of orthogonal local signals necessary for the first orthogonal mixer portion 4, and is constructed to include a first oscillator 5a and a first 90-degree phase shifter 5b. Also, the first channel selecting filter portion 6 selects an own channel signal by restricting bandwidths of the I, Q signals that are outputs of the first orthogonal mixer portion 4, and is constructed to include a first I-signal channel selecting filter 6a and a first Q-signal channel selecting filter 6b. In this case, the first channel selecting filter portion 6 consists of a LPF (Low Pass Filter) and a HPF (High Pass Filter), and the offset voltage serving as an obstacle of the signal processing is contained. However, since the offset voltage is eliminated by the HPF, this first channel selecting filter portion 6 acts as BPF resultantly. In this event, the first channel selecting filter portion 6 is a variable-band filter.

Also, the variable-gain amplifier portion 7 adjusts an amplitude of the signal being output from the first channel selecting filter portion 6 into a predetermined set amplitude, and is constructed to include an I-signal variable-gain amplifier 7a and a Q-signal variable-gain amplifier 7b. Also, the second orthogonal mixer portion 8 gets I, Q baseband signals that are output from the variable-gain amplifier portion 7 in the LIF receiver mode, and is constructed to include four mixers 8a to 8d, an adder 8e, and a subtractor 8f. Also, the second local oscillator portion 9 outputs a pair of orthogonal local signals that are necessary for the second orthogonal mixer portion 8, and is constructed to include a second oscillator 9a and a second 90-degree phase shifter 9b.

Also, the changing switch portion 10 selects any one of the I, Q signals output from the variable-gain amplifier portion 7 or the I, Q signals output from the second orthogonal mixer portion 8, and is constructed to include an I-signal changing switch 10a and a Q-signal changing switch 10b. Also, the second channel selecting filter portion 11 is a LPF that restricts the bandwidths of the I, Q signals output from the changing switch portion 10 respectively, and is constructed to include a second I-signal channel selecting filter 11a and a second Q-signal channel selecting filter 11b. In this case, the second channel selecting filter portion 11 is a variable-band filter.

Also, the decoding portion 12 is connected to the second channel selecting filter portion 11, and is constructed to include an I-signal AD converter 12a, a Q-signal AD converter 12b, an RSSI (Received Signal Strength Indicator) 12c, an AGC (Automatic Gain Control) portion 12d, a CDMA decoder portion 12e, a TDMA decoder portion 12f, and a receiver mode setting portion 12g. The I-signal AD converter 12a and the Q-signal AD converter 12b AD-convert the I signal and the Q signal being output from the second channel selecting filter portion 11 respectively. Also, the RSSI 12c gets signal amplitudes from outputs of the I-signal AD converter 12a and the Q-signal AD converter 12b. Also, the AGC 12d controls gains of the high-frequency amplifier portion 3 and the variable-gain amplifier portion 7 in response to the signal amplitude obtained by the RSSI 12c. Also, the CDMA decoder portion 12e decodes the signal in the CDMA system such as W-CDMA, etc. Also, the TDMA decoder portion 12f decodes the signal in the TDMA system such as GSM, etc. Also, the receiver mode setting portion 12g applies the setting, which is adaptive for the communication system (the CDMA system or the TDMA system), to the first channel selecting filter portion 6 and the second channel selecting filter portion 11, and controls switches that switch the high-frequency amplifier portion 3, the changing switch portion 10, and the CDMA decoder portion 12e and the TDMA decoder portion 12f.

Next, a flow of signals in the receiver shown in FIG.1 will be explained hereunder. First, the radio signal being received via the antenna portion 1 except the receiving radio band is attenuated by the high-frequency filter portion 2, then the amplitude is amplified by the high-frequency amplifier portion 3, and then the resultant signal is converted into the I, Q signals by the first orthogonal mixer portion 4. Then, the bandwidths of the I, Q signals are limited by the first channel selecting filter portion 6, and the amplitude is adjusted to a previously set amplitude by the variable-gain amplifier portion 7. In this case, the offset voltage in the variable-gain amplifier portion 7 is eliminated by the HPF.

Then, the changing switch portion 10 is switched in response to the communication system (the CDMA system or the TDMA system). The changing switch portion 10 selects the output signal of the variable-gain amplifier portion 7 at the time of receiving the CDMA signal, and selects the output signal of the second orthogonal mixer portion 8 at the time of receiving the TDMA signal. In other words, in the CDMA system, since the receiver of the present embodiment is set to the ZIF (Zero IF) receiver mode, the I, Q signals being output from the variable-gain amplifier portion 7 are input into the decoding portion 12 as the baseband signal via the second channel selecting filter portion 11. In contrast, in the TDMA system, since the receiver of the present embodiment is set to the LIF (Low IF) receiver mode, the I, Q signals being output from the variable-gain amplifier portion 7 as the IF (Interference Frequency) signal are input into the second orthogonal mixer portion 8 as the IF signal and converted into the baseband signal, and then input into the decoding portion 12 via the second channel selecting filter portion 11. In this case, the second channel selecting filter portion 11 supplements the attenuation value that is insufficient in the first channel selecting filter portion 6.

In the decoding portion 12, the I-component of the baseband signal is digital-converted by the I-signal AD converter 12a and also the Q-component is digital-converted by the Q-signal AD converter 12b. Then, amplitudes of respective components are calculated by the RSSC 12c, and the AGC 12d controls the gains of the high-frequency amplifier portion 3 and the variable-gain amplifier portion 7 to set the output of the RSSC 12c to a previously set value. The signals that are digital-converted by the I-signal AD converter 12a and the Q-signal AD converter 12b are decoded by the CDMA decoder portion 12e or the TDMA decoder portion 12f in compliance with the designated communication system.

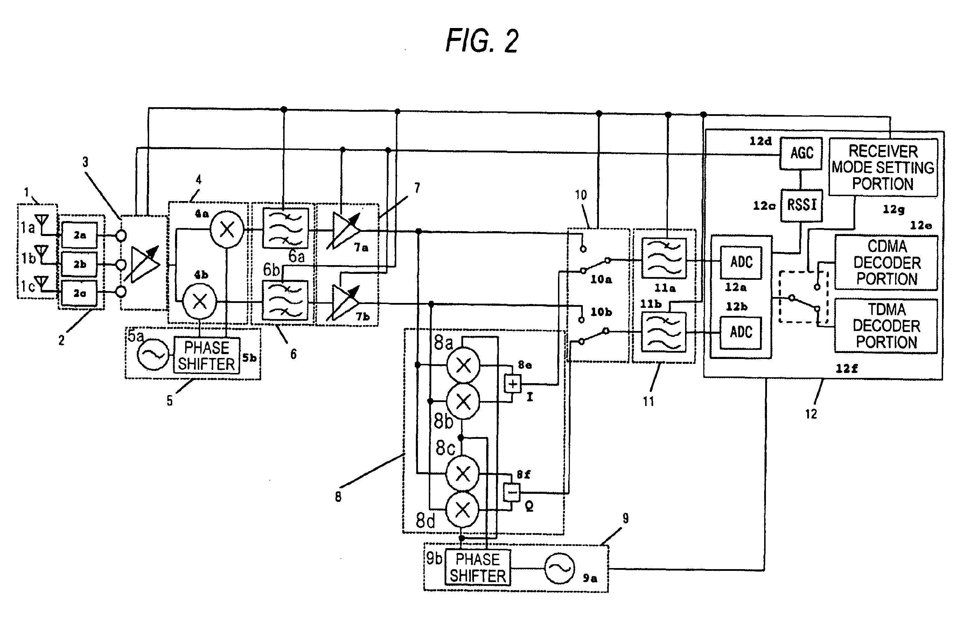

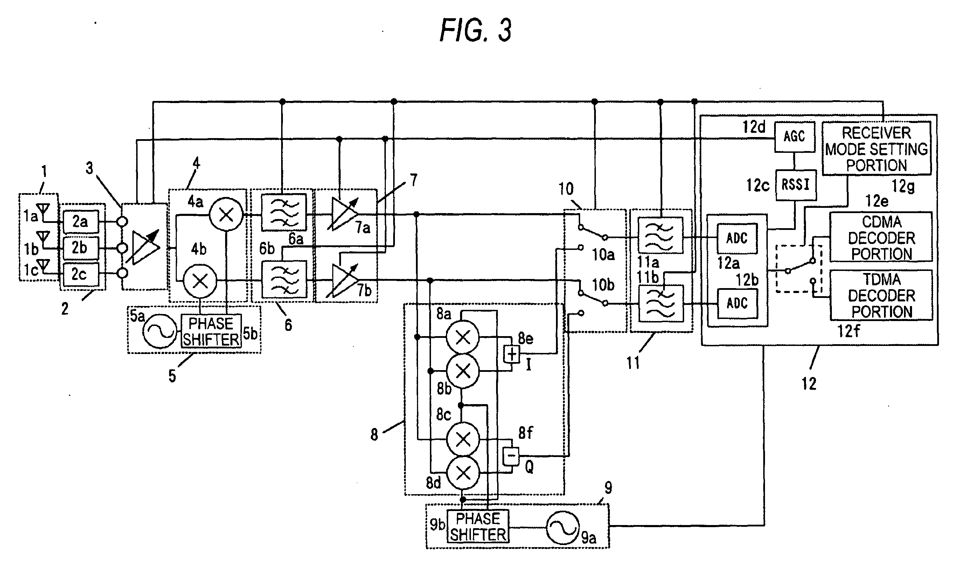

Next, basic operations of the LIF receiver and the ZIF receiver will be explained with reference to FIG. 2 and FIG.3 hereunder. FIG.2 is a configurative view showing a configuration of the receiver according to the first embodiment in the LIF receiver mode, and FIG.3 is a configurative view showing a configuration of the receiver according to the first embodiment in the ZIF receiver mode. In these Figures, the same symbols are affixed to the portions that are duplicated with FIG.1.

At first, a flow of signals in the receiver in the LIF receiver mode will be explained with reference to FIG.2 hereunder. First, the high-frequency signal being received via the antenna 1 except the receiving radio band is attenuated by the high-frequency filter portion 2, then the amplitude is amplified by the high-frequency amplifier portion 3, and then the IF signals of orthogonal I, Q components are output by mixing a pair of orthogonal output signals of the first local oscillator portion 5, which are detuned (offset) from the receiving signal frequency by a frequency that is equivalent to 1/2 of the channel interval, by virtue of the first orthogonal mixer portion 4. Then, the bandwidths are limited by the first channel selecting filter portion 6, and the signals are amplified or attenuated by the variable-gain amplifier portion 7 to adjust the amplitude to a previously set amplitude. Since the changing switch portion 10 selected the second orthogonal mixer portion 8, the output signal of the variable-gain amplifier portion 7 is input into the second orthogonal mixer portion 8 and is mixed with a pair of orthogonal outputs of the second local oscillator portion 9, which have the almost same frequency as the intermediate frequency, and thus the IF signals in the I, Q components are converted into the baseband signals. The I, Q component baseband signals being output from the second orthogonal mixer portion 8 are input into the second channel selecting filter portion 11 via the changing switch portion 10, then the bandwidths of the signals are limited herein, and then the signals are input into the decoding portion 12.

Then, a flow of signals in the receiver in the ZIF receiver mode will be explained with reference to FIG.3 hereunder. First, the high-frequency signal being received via the antenna 1 except the receiving radio band is attenuated by the high-frequency filter portion 2, then the amplitude is amplified by the high-frequency amplifier portion 3, and then the IF signals of orthogonal I, Q components are output by mixing a pair of orthogonal output signals of the first local oscillator portion 5, which have the almost same frequency as the receiving signal frequency, by virtue of the first orthogonal mixer portion 4. Then, the bandwidths are limited by the first channel selecting filter portion 6, and the signals are amplified or attenuated by the variable-gain amplifier portion 7 to adjust the amplitude to a previously set amplitude. Since the changing switch portion 10 selected the variable-gain amplifier portion 7, the output signal of the variable-gain amplifier portion 7 is input into the second channel selecting filter portion 11 via the changing switch portion 10 as it is. Here, the bandwidths of the signals are limited, and then the signals are input into the decoding portion 12.

In the LIF receiver mode and the ZIF receiver mode explained above, flows of signals in the receiver are different. In this case, as shown in FIG.1 to FIG.3, as the configuration of the receiver, the antenna portion 1, the high-frequency filter portion 2, the high-frequency amplifier portion 3, the first orthogonal mixer portion 4, and the variable-gain amplifier portion 7 are constructed by the same functional blocks, while the first local oscillator portion 5, the first channel selecting filter portion 6, and the second channel selecting filter portion 11 can be implemented by the same functional blocks only to have different frequency relationships. In summary, in the receiver in the LIF receiver mode, merely the second orthogonal mixer portion 8 and the second local oscillator portion 9 are added in structure to the ZIF receiver mode.

Next, individual uses of the ZIF receiver mode and the LIF receiver mode will be explained concretely while taking the digital communication system as an example. The digital communication systems that are used currently are roughly separated into the TDMA system and the CDMA system. As explained in the prior art, in the ZIF receiver, the offset voltage generated in the baseband portion must be eliminated. As the means for eliminating the offset voltage, the easiest method is to capacitive-couple the circuit blocks, as shown in FIG. 23. In this case, if a cut-off frequency is set not to have an influence on the receiving sensitivity characteristic, a time constant becomes very long because of the HPF characteristic.

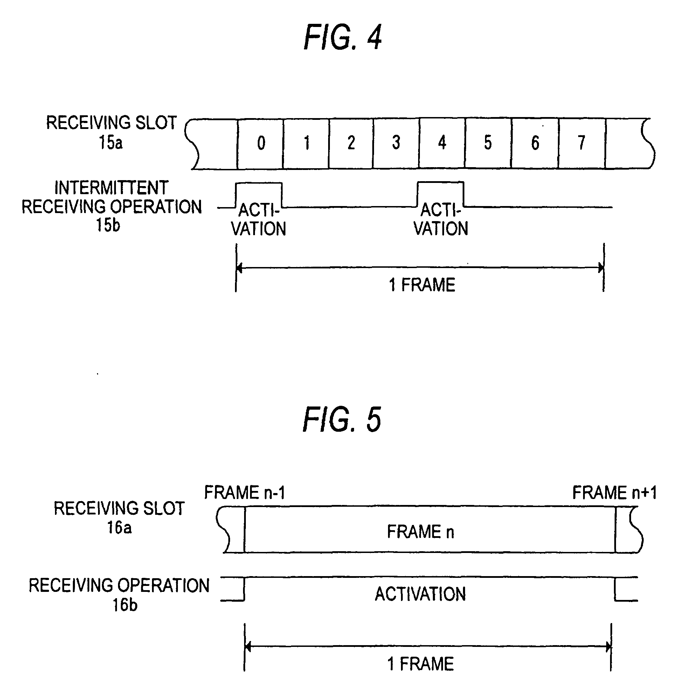

As an example of the TDMA system, an outline of a frame structure of GSM is shown in FIG.4. Since GSM is the TDMA/FDD system, a receiving slot 15a shown in FIG.4 will be explained. Normally, a monitor slot is received and then only a slot indicated by this slot is received. In GSM, since 1 frame is 4.615 second, 1 slot is 577 μ second, and 1 frame is constructed by 8 slots, an operation of receiving intermittently slots necessary for own station only like an intermittent receiving operation 15b is carried out. However, in the configuration shown in FIG.23, since a time required until the bias voltage stable state is obtained to receive the signal after the receiver is started is given by the relation shown in FIG.24, such time poses an obstacle to the intermittent receiving operation. Therefore, the ZIF receiver mode is not suitable for the TDMA system.

However, in the LIF receiver mode, since the signal is converted once into the intermediate frequency that is equivalent to 1/2 channel interval, a cut-off frequency can be set higher than the case of the ZIF receiver mode even when the HPF is arranged to eliminate the offset voltage, and thus a starting time can be shortened. Therefore, the LIF receiver mode is suitable for the TDMA system.

Next, as an example of the CDMA system, an outline of a frame structure of W-CDMA is shown in FIG. 5. Since W-CDMA is the CDMA/FDD system, a receiving slot 16a shown in FIG.5 will be explained hereunder. In the W-CDMA, since 1 frame is 10 msecond and basically the signal is continuously received in communication at a transmission speed designated by the base station, the intermittent receiving operation is not executed as shown in a receiving operation 16b and a signal bandwidth is wide. Thus, even when the HPF using the capacitive coupling is employed to eliminate the offset between the circuit blocks, the cut-off frequency can be set highly to some extent. Therefore, as shown in FIG. 23, even if the circuit blocks are capacitive-coupled, a starting time can be shortened. As a result, the ZIF receiver mode is suitable for the CDMA system.

In this manner, it is preferable that the receiver should be set to the ZIF receiver mode in the CDMA system and should be set to the LIF receiver mode in the TDMA system.

Next, respective settings of the first local oscillator portion 5, the first channel selecting filter portion 6, the second orthogonal mixer portion 8, the second local oscillator portion 9, and the second channel selecting filter portion 11, whose settings must be changed when the ZIF receiver mode and the LIF receiver mode are switched, will be explained hereunder. The LIF receiver mode will be explained concretely while using GSM as example, and The ZIF receiver mode will be explained concretely while using W-CDMA as example.

First, the case where the receiver is switched to the LIF receiver mode, i.e., reception of the TDMA system, will be explained with reference to FIG.2 hereunder. Assume that an output frequency of the first local oscillator portion 5 is set to the frequency that is detuned (offset) from the receiving frequency by 1/2 channel interval. A concrete example of the first channel selecting filter portion 6 was announced in "2000 IEEE Radio Frequency Integrated Circuit Symposium MOM3B-3 A LOW IF POLYPHASE Receiver for GSM using log domain signal processing". In order to attenuate the adjacent channel interference signal, the high-frequency cut-off frequency of the first channel selecting filter portion 6 is set to almost 180 kHz, and the low-frequency cut-off frequency is set to almost 10 kHz.

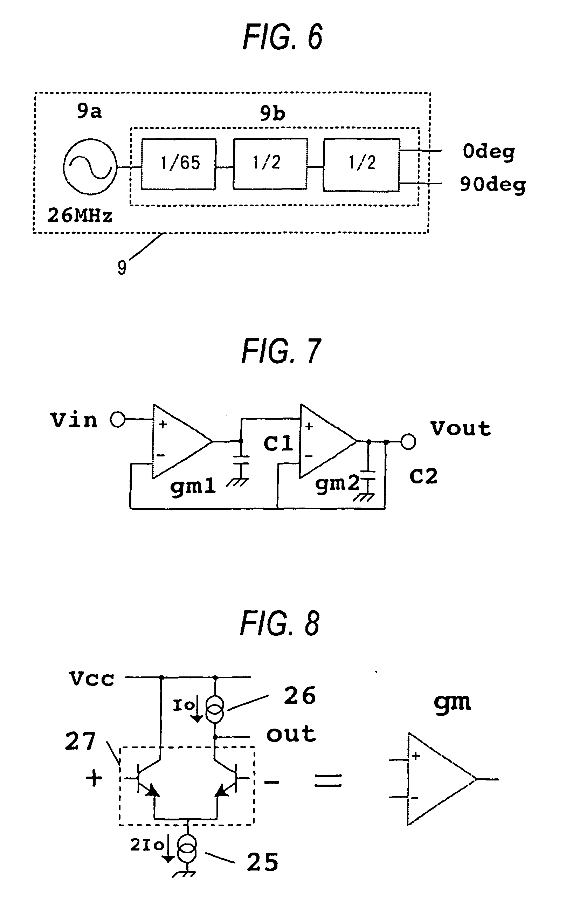

Also, the second orthogonal mixer portion 8 is set in its operation state and the changing switch portion 10 is set to pass the second orthogonal mixer portion 8 side. At this time, the output frequency of the second local oscillator portion 9 becomes 100 kHz that is almost identical to the frequency that is detuned by the 1/2 channel interval. If the frequency is 26 MHz used as the reference signal of GSM, 260 frequency division can be obtained, as shown in FIG.6. In this case, the second channel selecting filter portion 11 assures the attenuation value that is short in the first channel selecting filter portion 6.

On the contrary, the case where the receiver is switched into the ZIF receiver mode, i.e., reception of the CDMA system will be explained with reference to FIG.3 hereunder. The output frequency of the first local oscillator portion 5 is set to the frequency that is almost identical to the receiving frequency, operations of the second orthogonal mixer portion 8 and the second local oscillator portion 9 are stopped, and the changing switch portion 10 is set to pass the output signal of the variable-gain amplifier portion 7. The total filter characteristic of the first channel selecting filter portion 6 and the second channel selecting filter portion 11 becomes a wide band LPF that can pass the baseband signal of 3.84 Mcps that is the transmission speed of W-CDMA and filter the adjacent channel signal bandwidth. The concrete example was announced in "2000 IEEE Radio Frequency Integrated Circuit Symposium MOM3B-2 Analog Baseband IC for use in direct conversion WCDMA receiver", and the bandwidth is almost 2 MHz therein. It is believed that the HPF having the cut-off frequency of about 20 kHz, which has no influence on the receiving characteristic, is suitable.

Then, a particular example of the characteristic switching in respective blocks to reconcile the LIF receiver and the ZIF receiver is shown. If the first channel selecting filter portion 6 and the second channel selecting filter portion 11 are constructed by the gm-C filter, the frequency can be varied simply. Normally, the channel selecting filter n (1, 2, 3...) is constructed by using LPF and HPF in combination. Explanation will be made by taking a secondary LPF and a primary HPF as examples.

First, a secondary biquad LPF is shown in FIG. 7 as a configurative example of LPF, and the transfer function H(s) and an angular frequency $\omega$ and Q are given in the following. In this case, the secondary biquad LPF (gm-C filter) shown in FIG.7 consists of $gm_1$, $gm_2$, $C_1$ and $C_2$.

$$H(s) \cdot \frac{\dfrac{C_1 C_2}{gm_1 gm_2}}{s^2 \cdot \dfrac{C_2}{gm_2}\ s \cdot \dfrac{C_1 C_2}{gm_1 gm_2}}$$

$$\cdot \cdot \sqrt{\frac{C_1 C_2}{gm_1 gm_2}}$$

$$Q \cdot \sqrt{\frac{gm_2 C_1}{gm_1 C_2}}$$

Then, the gm amplifier constituting the filter is shown in FIG.8, and the gm value is given in the following. In this case, the gm amplifier is constructed by current sources 25, 26 and a differential pair 27. Where Vt is a thermal voltage and Io is an operating current of the gm amplifier in the following expression.

$$gm \cdot \frac{Io}{2Vt}$$

$$(Vt \cdot \frac{kT}{q})$$

From the relationship in the above equation, it is understood that the cut-off frequency and the Q value of the LPF can be controlled by $gm_1$ of the gm amplifier 1 and $gm_2$ of the gm amplifier 2 shown in FIG.7. Also, since gm can be controlled by the operating current Io of the gm amplifier, the receiver can be set in each receiver mode of the LIF receiver mode and the ZIF receiver mode by controlling the operating currents of respective gm amplifiers to change the cut-off frequency and the Q value of the filter.

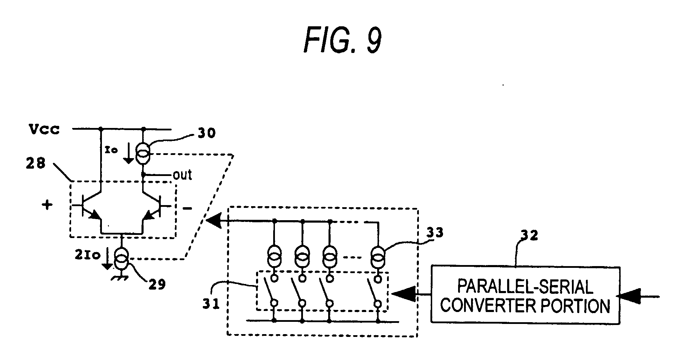

Also, the setting of the frequency characteristic can be implemented by varying the operating current value of the gm amplifier by using a DA converter shown in FIG.9. The DA converter shown in FIG.9 is constructed by a differential pair transistor 28, variable-current current sources 29, 30, 33, a current controlling switch 31, and a serial-parallel converter portion 32 of the control signal. Also, settings of respective radio systems and respective receiver modes are set in storing circuits such as ROM, RAM, etc. as eigen standard values, and then the settings are carried out by reading these values, as the case may be, to control the DA converter. At this time, the variable-current current sources 29, 30, 33 function as the DA converter.

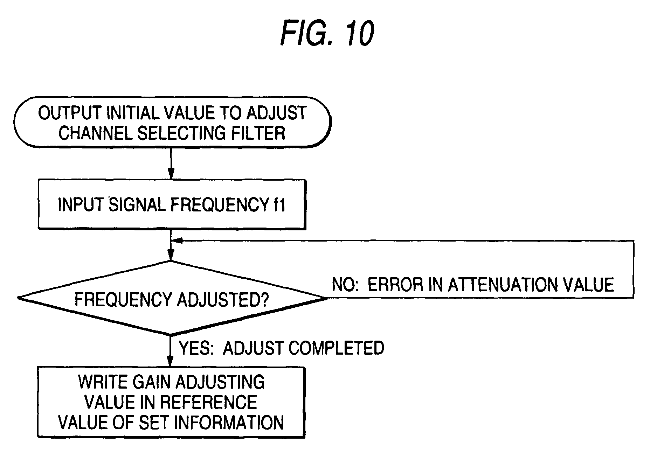

In addition, in the case that variation in the frequency characteristic is caused due to variation in the circuit elements, as shown in a flowchart of FIG.10, variation in the frequency of the filter is absorbed by detecting errors, which are deviated from the predetermined standard values of the frequency characteristic of the channel selecting filter, in respective receiving states of GSM and W-CDMA at the time of adjustment in the factory, and then replacing corrected values after adjustment with the standard values as respective initial values, which are setting information to control the gm amplifier, to correct the frequency characteristic.

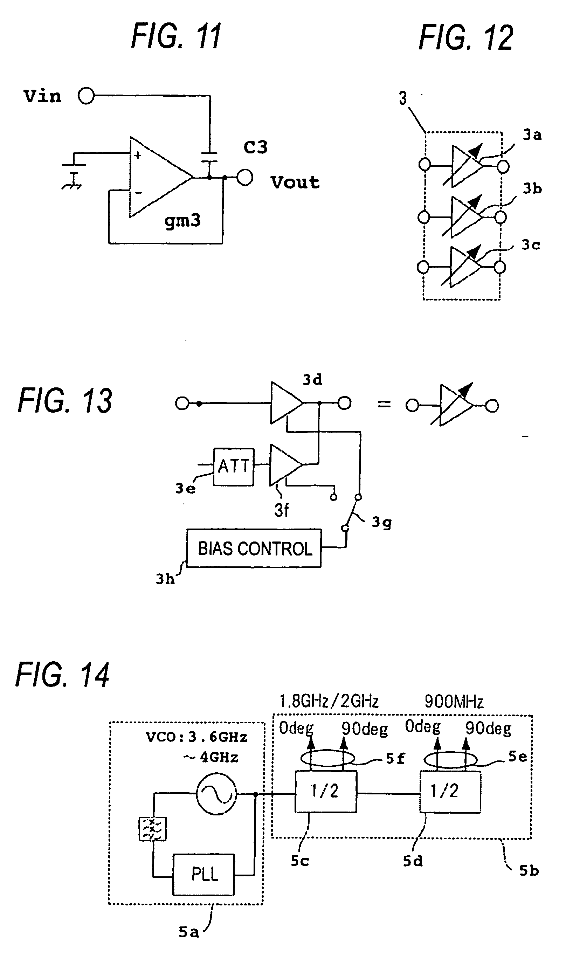

Then, a primary HPT as a configurative example of HPF is shown in FIG.11, and a transfer function H(s) and an angular frequency ω are shown. In this case, the primary HPT shown in FIG.11 consists if $gm_3$ and $C_3$.

$$H(s) \cdot \frac{s}{s \cdot \dfrac{C_1}{gm_1}}$$

$$\cdot \cdot \frac{C_1}{gm_1}$$

Like the secondary biquad LPF shown in above FIG.7, this primary HPT can also be set to both the LIF receiver mode and the ZIP receiver mode since the cut-off frequency is varied by controlling the gm amplifier by a current. Also, like the LPF, in the HPF, settings of respective radio systems and respective receiver modes are set in storing circuits such as ROM, RAM, etc. as eigen standard values, and then the settings are carried out by reading these values, as the case may be, to control the DA converter. Also, in the same way as the method shown in the flowchart in FIG.10, variation in the frequency of the filter is absorbed by replacing corrected values after adjustment with the standard values as respective initial values, which are setting information to control the gm amplifier, to correct the frequency characteristic. In this case, explanation is made by using the gm-C filter in the above explanation, but any configuration may be employed if its frequency characteristic may be changed.

Next, a configurative example of the high-frequency amplifier portion 3 will be explained with reference to FIG.12 and FIG.13 hereunder. In the GSM system, mainly a 900 MHz band and a 1.8 GHz band are used currently. Also, in the W-CDMA system, mainly a 2 GHz band is used. Therefore, as shown in FIG.12, the high-frequency amplifier portion 3 can deal with respective bands by arranging high-frequency amplifiers 3a, 3b, 3c in respective frequency bands. Also, in the event that the high-frequency amplifier portion 3 is constructed as the variable-gain amplifier, if the high-frequency amplifier 3a for the 900 MHz band is considered as an example, such amplifier can be implemented by adding a high-frequency amplifier 3d and an attenuator 3e and then switching a high-frequency amplifier 3f and a gain control switch 3g by a bias control 3h in use, as shown in FIG.13. In FIG.13, the variable gain is explained as 2 stepwise values. But the multi-valued type and the continuous-variable type may be employed. Also, respective frequency bands may be formed to have the same configuration.

Next, the first local oscillator portion 5 will be explained with reference to FIG.14 hereunder. The first oscillator 5a is a frequency synthesizer, and the phase shifter 5b consists of a first frequency divider (1/2) 5c and a second frequency divider (1/2) 5d. In this case, these frequency dividers are an ECL-type FF and output orthogonal phase signals simultaneously with 1/2 frequency division.

If the first oscillator 5a can output the frequency from almost 3.6 GHz to 4 GHz, the 900 MHz band is obtained by dividing 3.6 GHz of the output of the first oscillator 5a into a 1/4 frequency by means of the first frequency divider 5c and the second frequency divider 5d, and also the quadrature phase output 5e is obtained. The 1.8 GHz band is obtained by dividing 3.6 GHz of the output of the first oscillator 5a into a 1/2 frequency by means of the first frequency divider 5c, and also the quadrature phase output 5f is obtained. Similarly, the 2 GHz band is obtained by dividing 4 GHz of the output of the first oscillator 5a into the 1/2 frequency by means of the first frequency divider 5c, and also the quadrature phase output 5f is obtained.

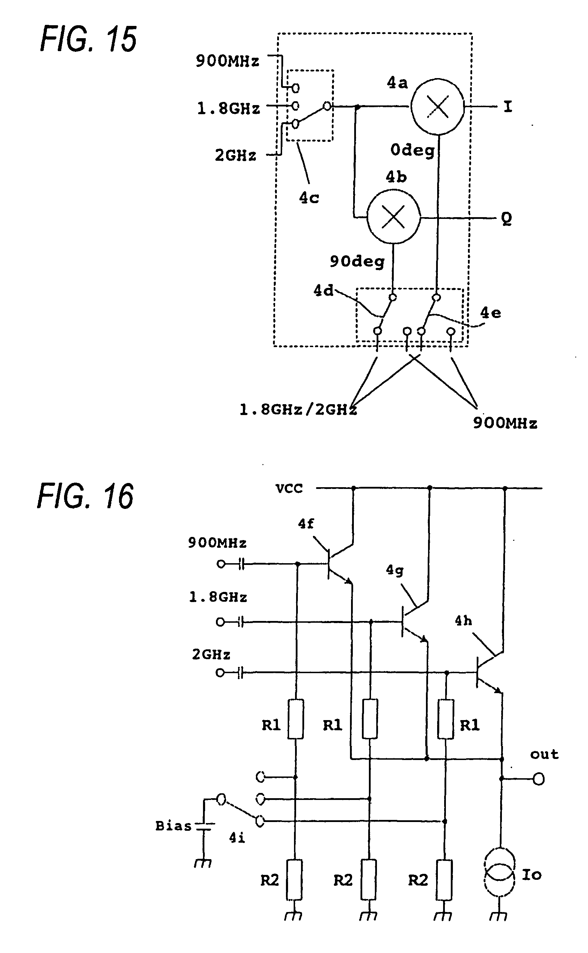

Next, a method of selecting a frequency band of the first orthogonal mixer portion 4 will be explained with reference to FIG.15 and FIG.16 hereunder. Selection of the frequency band can be accomplished by FIG. 15. The frequencies that are input from the high-frequency amplifier portion 3 are 900 MHz band, 1.8 GHz band, and 2 GHz band, and the first local oscillator portion 5 has 900 MHz band, 1.8 GHz band, and 2 GHz band, which correspond to respective receiving frequency bandwidths. Outputs of the high-frequency amplifier portion 3 and the first local oscillator portion 5 are selected by high-frequency switches 4c, 4d, 4e to set a desired frequency.

The high-frequency switch 4c will be explained with reference to FIG.16 hereunder. FIG.16 is a circuit configurative view showing an example of the high-frequency switch 4c. An input signal can be switched by ON/OFF-controlling respective base-bias voltages of a first emitter follower 4f, a second emitter follower 4g, and a third emitter follower 4h by using a selector switch 4i. Any type switch such as a differential amplifier, a diode, etc. may be employed if selection/switching of the input signal can be conducted. In this case, if the high-frequency switch 4c shown in FIG.16 is used as two sets of binary switches, the signal of the first local oscillator portion 5 can be selected.

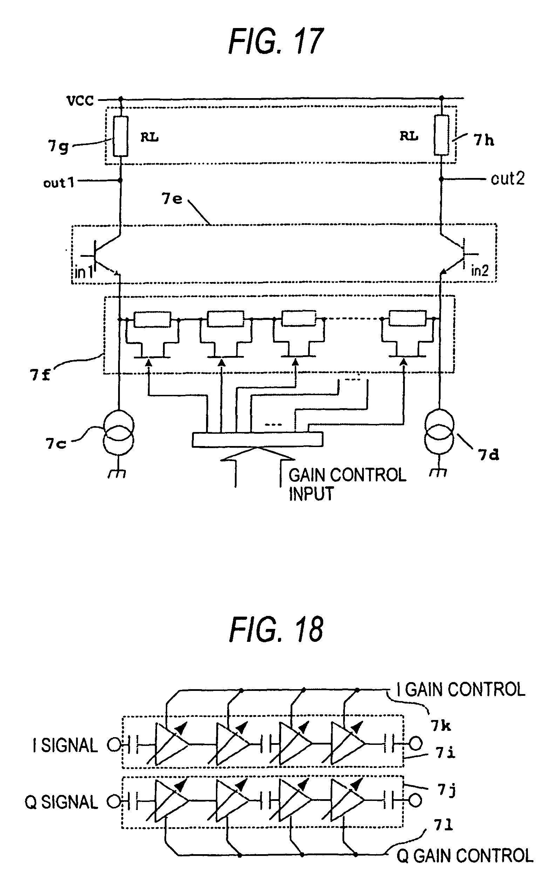

Next, the variable-gain amplifier portion 7 will be explained with reference to FIG.17 and FIG.18 hereunder. The variable-gain amplifier portion 7 is constructed by current sources 7c, 7d, a differential pair 7e, a variable differential-pair emitter resistor 7f, and load resistors 7g, 7h. A gain of the variable-gain amplifier portion 7 is decided by the differential pair 7e and the variable differential-pair emitter resistor 7f. Also, an output of the variable-gain amplifier portion 7 is obtained as a product of gm, which is decided by the differential pair 7e and the variable differential-pair emitter resistor 7f, and the load resistors. A plurality of taps are provided to the variable differential-pair emitter resistor 7f, and the gain is varied by using switches, which are formed of MOSFETs, etc., to adjust the resistance value.

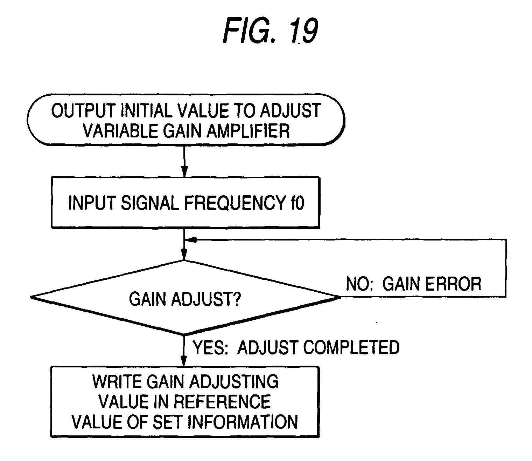

If variable gain amplifiers are cascade-connected at plural stages like variable gain amplifiers 7i, 7j shown in FIG.18, a wide gain variation can be implemented. Also, the gain of the variable-gain amplifier can be converted into serial data controls 7k, 7l of several bits by a serial-parallel converter circuit. Also, if the gain necessary for the receiving system becomes different according to the radio system or the receiver mode (the LIF receiver mode or the ZIF receiver mode), the standard value of the gain is set by using the variable-gain amplifier. Also, setting information as eigen standard values of respective radio systems and respective receiver modes are set in the storing circuits such as ROM, RAM, etc., and then the settings are carried out by reading such information, as the case may be. In addition, as for variation in the gain due to the variation in circuit elements, as shown in a flowchart of FIG.19, such variation in the gain can be absorbed by detecting errors from the standard values of the gain at the time of adjustment in the factory, and then replacing the set information for the variable-gain amplifier control after adjustment with the standard values to correct the gain.

As described above, according to the receiver of the present embodiment, the multi-mode receiver, which are adapted appropriately for a plurality of communication systems (the TDMA system and the CDMA system) without provision of a particular offset voltage eliminating circuit, can be provided.

[Second Embodiment]

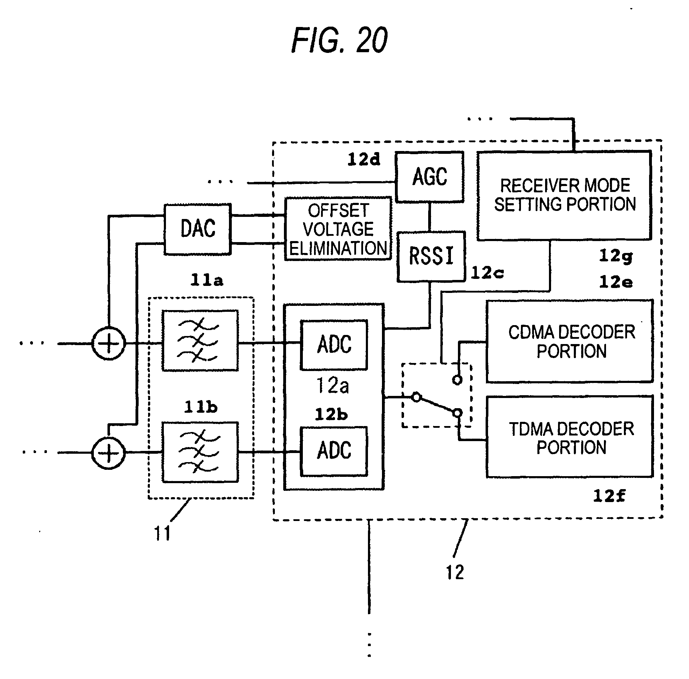

A receiver according to a second embodiment of the present invention will be explained with reference to FIG.20 to FIG.22 hereunder. In the first embodiment, it is explained that, since the offset voltage generated by employing the LIF receiver mode or the ZIF receiver mode in combination in signal systems such as the first orthogonal mixer portion 4, the first channel selecting filter portion 6, the variable-gain amplifier portion 7, etc. can be eliminated by HPF, the particular offset voltage eliminating circuit is not needed. However, in the LIF receiver mode, as already explained above, the HPF for eliminating the offset voltage cannot be arranged in baseband outputs of the analog I, Q serving as interfaces to the digital baseband portion. Therefore, if the offset voltage is not permitted in the decoding portion 12, the offset voltage elimination circuit may be provided.

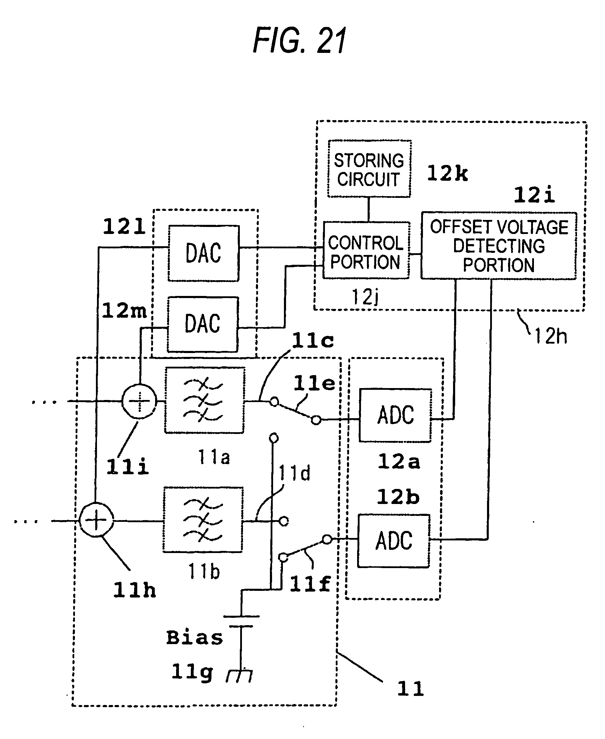

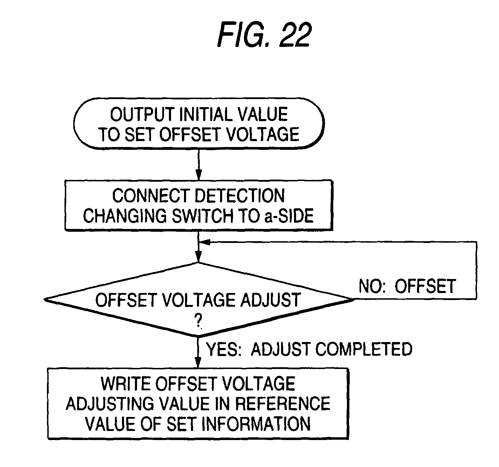

FIG.20 shows an interface portion between the second channel selecting filter portion 11, which give outputs of the I, Q baseband signals, and the decoding portion 12. An example of the offset voltage elimination circuit will be explained with reference to FIG.21 and a flowchart in FIG.22 hereunder. Analog baseband output potentials 11c, 11d of I, Q components are compared with a reference potential 11e, and then adjustment is made by using AD converters (ADC) 12a, 12b, an offset voltage adjusting portion 12h, DA converters (DAC) 12l, 12m, and adders 11h, 11i to minimize a difference between them. Normally, this adjustment is made in the factory, and DAC control values are set in a storing circuit 12k such as ROM, RAM, etc. as the set information and then the setting is executed at the time of the receiving operation by reading these values. As a result, the more stable receiving characteristic can be obtained only by the simple offset voltage elimination, i.e., only by carrying out the adjustment at the time of the factory forwarding.

[Third Embodiment]

A receiver according to a third embodiment of the present invention will be explained hereunder. As explained in the first embodiment, respective frequency characteristics and Qs of the first channel selecting filter portion 6 and the second channel selecting filter portion 11 can be varied. Hence, the frequency characteristic and the Q value can be set to meet to any communication system. Therefore, the receiver that is adapted for any communication system can be constructed in the receivable frequency bandwidth.

In the first and second embodiments, the multi-mode receiver applied to W-CDMA and GSM is explained. But the present invention is not limited to these radio systems, and may be applied to the analog communication system such as AMP, etc. Also, if the communication system can satisfy the radio standard in the ZIF receiver mode even in the TDMA system, the receiver of the present invention may be employed in the ZIF receiver mode. In addition, if the communication system can satisfy the radio standard in the LIF receiver mode even in the CDMA system, the receiver of the present invention may be employed in the LIF receiver mode.

Also, if the CDMA decoder portion 12e and the TDMA decoder portion 12f of the decoding portion 12 shown in FIG.1 are constructed as modules, or if the radio communication system that can be decoded is varied by using a software, or if both configurations are employed, a change from W-CDMA to IS95 or a change from GSM to PHS is permitted. As a result, the receiver that is adapted for a number of communication systems can be implemented. In addition, when the receiver intends to cope with the international roaming by using PDC and GSM, etc., for example, one system out of respective radio communication systems is not needed. Therefore, the corresponding communication system can be varied simply only by varying the decoding portion.

[Fourth Embodiment]

A receiver according to a fourth embodiment of the present invention will be explained hereunder. In the first, second and third embodiments, the multi-mode receiver is explained. In the single-mode receiver using the TDMA system or the CDMA system, although the receiver is constructed up to here by the dedicated integrated circuit every radio communication system, the receiver that can be fitted for various radio communication systems can be const ructed by the same integrated circuit if such receiver is fixed to the LIF receiver mode or the ZIF receiver mode in use.

In this event, the receiver is explained in the first and second embodiments. But a communication terminal may be constructed by combining the concerned receiver and a transmitter.

Also, the present invention is made based on Japanese Patent Application No.2001-228063 filed on July 27, 2001 and the contents are incorporated herein as the reference.

<Industrial Applicability>

As explained above, according to the receiver and the communication terminal of the present invention, the multi-mode receiver and the communication terminal that are adapted appropriately for a plurality of communication systems (the TDMA system and the CDMA system) can be provided without necessity to provide the particular offset voltage elimination circuit. Also, the receiver and the communication terminal that is adapted for any one communication system can be provided by the same configuration.

**Claims**

1. A receiver adapted for both communication systems of a TDMA system and a CDMA system, said receiver comprising:

   a first orthogonal mixer portion for orthogonal-transforming a received signal by a signal having a predetermined frequency;
   a decoding portion for decoding the signal that is subjected to orthogonal transformation;
   a changing switch portion for switching a signal path from the first orthogonal mixer portion to the decoding portion when a communication system is the TDMA system or the CDMA system; and
   a second orthogonal mixer portion for orthogonal-transforming a signal that is subjected to orthogonal transformation in the first orthogonal mixer portion;

   wherein, when the communication system is the TDMA system, the first orthogonal mixer portion orthogonal-transforms the received signal by a signal whose frequency is offset from the received signal, and the changing switch portion selects the signal path through which the signal that is subjected to orthogonal transformation in the first orthogonal mixer portion is input into the decoding portion via the second orthogonal mixer portion, and

   wherein, when the communication system is the CDMA system, the first orthogonal mixer portion orthogonal-transforms the received signal by a signal whose frequency is identical to the received signal, and the changing switch portion selects the signal path through which the signal that is subjected to orthogonal transformation in the first orthogonal mixer portion is input into the decoding portion without intervention of the second orthogonal mixer portion.

2. The receiver according to claim 1,
   wherein the decoding portion has a TDMA decoder portion for decoding a signal in the TDMA system and a CDMA decoder portion for decoding a signal in the CDMA system, and
   wherein the signal is decoded by using the TDMA decoder portion when the communication system is the TDMA system, and the signal is decoded by using the CDMA decoder portion when the communication system is the CDMA system.

3. The receiver according to claim 1 or claim 2, further comprising:

   a first filter portion for band-limiting the signal that is subjected to the orthogonal transformation in the first orthogonal mixer portion;
   a second filter portion for band-limiting the signal that is subjected to band limitation in the first filter portion and also is subjected to the orthogonal transformation in the first orthogonal mixer portion or the second orthogonal mixer portion;
   a filter setting changing portion for changing settings of the first filter portion and the second filter portion in response to the communication system;
   a high-frequency amplifier portion for amplifying the received signal;
   a variable-gain amplifier portion for adjusting the signal, which is subjected to the band limitation in the first filter portion, to a predetermined amplitude level; and
   a gain varying portion for varying a gain of the variable-gain amplifier portion or gains of the high-frequency amplifier portion and the variable-gain amplifier portion in response to the amplitude of the signal that is input into the decoding portion.

**4.** The receiver according to claim 3,
wherein the settings of the first filter portion and the second filter portion are a frequency characteristic and a Q value of each filter portion.

**5.** A terminal having the receiver set forth in claim 1, claim 2, claim 3 or claim 4 in CLAIMS.

FIG. 1

# FIG. 2

EP 1 414 163 A1

## FIG. 3

## FIG. 4

RECEIVING SLOT
15a

| 0 | 1 | 2 | 3 | 4 | 5 | 6 | 7 |

INTERMITTENT
RECEIVING OPERATION
15b

ACTI-VATION          ACTI-VATION

1 FRAME

## FIG. 5

RECEIVING SLOT
16a

FRAME n-1          FRAME n+1

FRAME n

RECEIVING OPERATION
16b

ACTIVATION

1 FRAME

## FIG. 6

## FIG. 7

## FIG. 8

FIG. 9

## FIG. 10

```
┌─────────────────────────────────┐
│  OUTPUT INITIAL VALUE TO ADJUST  │
│    CHANNEL SELECTING FILTER      │
└─────────────────────────────────┘
                 │
                 ▼
┌─────────────────────────────────┐
│    INPUT SIGNAL FREQUENCY f1     │
└─────────────────────────────────┘
                 │
                 ▼
        ◇ FREQUENCY ADJUSTED? ◇ ──── NO: ERROR IN ATTENUATION VALUE
                 │
                 │ YES: ADJUST COMPLETED
                 ▼
┌─────────────────────────────────┐
│       WRITE GAIN ADJUSTING       │
│        VALUE IN REFERENCE        │
│     VALUE OF SET INFORMATION     │
└─────────────────────────────────┘
```

## FIG. 11

Vin

C3

Vout

gm3

## FIG. 12

3

3a

3b

3c

## FIG. 13

3d

=

ATT

3e

3f

3g

BIAS CONTROL

3h

## FIG. 14

1.8GHz/2GHz          900MHz

0deg    90deg      0deg    90deg

VCO:3.6GHz
~4GHz

5f                5e

1/2              1/2

5c                5d

5b

PLL

5a

*FIG. 15*

900MHz

1.8GHz

2GHz

4c

4a

0deg

4b

90deg

4d

4e

I

Q

1.8GHz/2GHz

900MHz

*FIG. 16*

VCC

900MHz

1.8GHz

2GHz

4f

4g

4h

R1    R1    R1

out

Bias

4i

R2    R2    R2

Io

## FIG. 17

## FIG. 18

# FIG. 19

```
┌─────────────────────────────────┐
│  OUTPUT INITIAL VALUE TO ADJUST  │
│     VARIABLE GAIN AMPLIFIER      │
└─────────────────────────────────┘
                 │
                 ▼
┌─────────────────────────────────┐
│   INPUT SIGNAL FREQUENCY f0      │
└─────────────────────────────────┘
                 │
                 ▼
         ◇ GAIN ADJUST? ◇ ─── NO: GAIN ERROR
                 │
                 │ YES: ADJUST COMPLETED
                 ▼
┌─────────────────────────────────┐
│      WRITE GAIN ADJUSTING        │
│       VALUE IN REFERENCE         │
│   VALUE OF SET INFORMATION       │
└─────────────────────────────────┘
```

## FIG. 20

# FIG. 21

## FIG. 22

```
        ┌──────────────────────────┐
        │   OUTPUT INITIAL VALUE    │
        │  TO SET OFFSET VOLTAGE    │
        └──────────────────────────┘
                     │
                     ▼
        ┌──────────────────────────┐
        │    CONNECT DETECTION      │
        │ CHANGING SWITCH TO a-SIDE │
        └──────────────────────────┘
                     │
                     ▼
             ◇ OFFSET VOLTAGE ADJUST ◇ ──── NO: OFFSET
                     ?
                     │
                     │ YES: ADJUST COMPLETED
                     ▼
        ┌──────────────────────────┐
        │   WRITE OFFSET VOLTAGE    │
        │ ADJUSTING VALUE IN REFERENCE │
        │  VALUE OF SET INFORMATION │
        └──────────────────────────┘
```

## FIG. 23

## FIG. 24

BIAS VOLTAGE TRANSIENT
CHARACTERISTIC AT
CAPACITIVE COUPLING

121

122

DC BIAS STABILIZED TIME

FIG. 25

EP 1 414 163 A1

FIG. 26

FIG. 27

FIRST LOCAL OSCILLATION
FREQUENCY
132

131f  131e  131c  131a  131b  131d

HIGH FREQUENCY
BAND SIGNAL
ARRANGEMENT
131

$fRF-3$  $fRF-2$  $fRF-1$  $fRF$  $fRF+1$  $fRF+2$

DESIRED
RECEIVING
WAVE

NEIGHBORING
INTERFERENCE WAVE

NEIGHBORING INTERFERENCE WAVE

IF BAND SIGNAL
ARRANGEMENT
133

DESIRED
RECEIVING WAVE

IMAGE
INTERFERENCE WAVE

133a  133b  133d

NEIGHBORING
INTERFERENCE WAVE

$fIF$  $fIF+1$  $fIF+2$

$fIF-1$  $fIF-2$  $fIF-3$

133c  133e  133f

NEIGHBORING INTERFERENCE WAVE

EP 1 414 163 A1

## INTERNATIONAL SEARCH REPORT

| International application No. |
| --- |
| PCT/JP02/05491 |

| A. CLASSIFICATION OF SUBJECT MATTER |
| --- |
| Int.Cl⁷ H04B1/26, H04B1/30, H04L27/14 |

According to International Patent Classification (IPC) or to both national classification and IPC

| B. FIELDS SEARCHED |
| --- |
| Minimum documentation searched (classification system followed by classification symbols)<br>Int.Cl⁷ H04B1/26, H04B1/30, H04L27/14 |

Documentation searched other than minimum documentation to the extent that such documents are included in the fields searched

| Jitsuyo Shinan Koho | 1922–1996 | Toroku Jitsuyo Shinan Koho | 1994–2002 |
| --- | --- | --- | --- |
| Kokai Jitsuyo Shinan Koho | 1971–2002 | Jitsuyo Shinan Toroku Koho | 1996–2002 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| P,A | WO 00/54420 A1 (Mitsubishi Electric Corp.),<br>14 September, 2000 (14.09.00),<br>Page 7, line 10 to page 15, line 13; Fig. 4<br>& EP 1083669 A1 | 1-5 |
| A | JP 10-022861 A (Matsushita Electric Industrial Co., Ltd.),<br>23 January, 1998 (23.01.98),<br>Page 5, left column, line 16 to page 7, left column, line 30; Fig. 1<br>(Family: none) | 1-5 |

| ☐ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>27 August, 2002 (27.08.02) | Date of mailing of the international search report<br>10 September, 2002 (10.09.02) |
| --- | --- |
| Name and mailing address of the ISA/<br>Japanese Patent Office | Authorized officer |
| Facsimile No. | Telephone No. |

Form PCT/ISA/210 (second sheet) (July 1998)